# FASCICULE DE BREVET EUROPEEN

(11) **EP 1 495 528 B1**
(45) Date de publication et mention de la délivrance du brevet: **29.08.2018**
(21) Numéro de dépôt: 03725304.4
(22) Date de dépôt: 19.03.2003
(51) Int. Cl.: H02K 5/173, F16C 35/067

(54) **ALTERNATEUR POUR VEHICULE AUTOMOBILE**
WECHSELSTROMGENERATOR FÜR KRAFTFAHRZEUGE
ALTERNATOR FOR A MOTOR VEHICLE

(30) Priorité: 27.03.2002 FR 0203804
(43) Date de publication de la demande: 12.01.2005
(73) Titulaire: VALEO EQUIPEMENTS ELECTRIQUES MOTEUR, 94017 Créteil Cedex (FR)
(72) Inventeur: LEPRETRE, Laurent, F-62360 Condette (FR)
(74) Mandataire: Gamonal, Didier
(86) Numéro de dépôt international: PCT/FR2003/000865
(87) Numéro de publication internationale: WO 2003/081750

(56) Documents cités:
- CH-A- 426 387
- DE-A- 19 957 709
- FR-A- 2 377 723
- GB-A- 2 025 153
- US-A- 3 469 897
- US-A- 4 094 559
- US-A- 6 145 199

## Description

L'invention concerne un alternateur notamment pour véhicule automobile.

De façon connue un alternateur est une machine électrique tournante, qui comporte un rotor solidaire d'un arbre de rotor et un stator sur chacun desquels est réalisé un bobinage électrique. Le rotor et le stator sont montés dans un carter se montant sur une partie fixe.

En général le stator comporte trois bobinages en sorte que l'alternateur est du type triphasé. En variante l'alternateur est du type hexaphasé.

L'alternateur permet de transformer un mouvement de rotation du rotor inducteur, entraîné par le moteur thermique du véhicule, en un courant électrique induit dans les bobinages du stator. L'alternateur peut aussi être réversible et constituer un moteur électrique ; son stator constituant alors un inducteur et son rotor un induit permettant d'entraîner en rotation, via l'arbre de rotor, le moteur thermique du véhicule. Cet alternateur réversible est appelé alterno-démarreur et permet de transformer l'énergie mécanique en énergie électrique et vice versa pour notamment démarrer le moteur du véhicule automobile ou constituer un moteur auxiliaire.

Le carter de l'alternateur comporte un palier avant doté centralement d'un logement délimité par une portée annulaire d'orientation axiale et une paroi transversale pour le montage d'un roulement à billes, par exemple étanche, supportant à rotation l'extrémité, dite extrémité avant, de l'arbre de rotor portant à l'extérieur du carter une poulie solidaire en rotation de cet l'arbre.

Dans un tel alternateur, décrit par exemple dans le document US A 5270 605, la bague extérieure du roulement à billes est serrée axialement entre la paroi transversale et une pièce de maintien présentant une ouverture centrale traversée par l'arbre de rotor et délimitant une portée de contact avec cette bague extérieure, qui est ainsi calée axialement dans un sens.

La pièce de maintien est fixée sur le palier avant à l'aide de vis à tête plate et est centralement de forme bombée en sorte que la pièce de maintien est axialement encombrante.

Pour réduire l'encombrement axial une solution consiste à utiliser une pièce de maintien de forme globalement plate et relativement mince en supprimant la partie centrale bombée de celle-ci. La pièce de maintien est alors en forme de plaquette.

Cet assemblage à vis et plaquette de maintien n'a pas une tenue aux vibrations aussi bonne que souhaitée ; des contraintes mécaniques importantes se produisant au niveau des vis.

D'ailleurs, le document GB 2 025 153 A divulgue un alternateur selon le préambule de la revendication 1. La présente invention a pour objet d'augmenter la fiabilité de ce type d'assemblage, notamment la tenue aux vibrations.

Suivant l'invention un alternateur du type sus-indiqué, comportant une plaquette de maintien fixée à l'aide de vis sur le palier avant, est caractérisé en ce que la plaquette de maintien présente une fente débouchante s'étendant depuis son ouverture centrale jusqu'à sa périphérie externe.

Grâce à la fente débouchante, on n'augmente pas le nombre de pièces et on évite un assemblage hyperstatique de la plaquette de maintien sur le palier avant.

Plus précisément on rend l'assemblage plus souple ce qui évite une déformation importante de la plaquette sous l'effet de serrage des vis. Les vis ne risquent pas de casser sous l'effet des vibrations dont est l'objet l'alternateur en fonctionnement.

Lors du serrage des vis les contraintes mécaniques radiales et axiales sont diminuées grâce à la mobilité permise par la fente en sorte que la plaquette de maintien est ménagée.

Ainsi, d'une part, il est possible d'utiliser des vis à tête fraisée, ce qui permet de réduire l'encombrement axial de l'alternateur, et, d'autre part, de réduire encore l'épaisseur de la plaquette de maintien.

La plaquette de maintien est axialement peu encombrante et dans tous les cas la mise en place des dernières vis ne pose pas de problème grâce à la fente.

Cela rend possible un montage inversé ; les têtes des vis s'appuyant sur la face externe du palier avant, tandis que la tige filetée de chaque vis traverse un trou de passage ménagé dans le palier avant pour se visser dans un trou taraudé de la plaquette facile à réaliser.

Cette disposition permet de ne pas tarauder le trou du palier avant ce qui réduit les coûts. Les trous du palier avant associés aux vis, d'une manière générale aux organes de fixation, sont donc en variante des trous de passage.

Dans une forme de réalisation la plaquette de maintien est montée à l'intérieur du carter. En variante la plaquette de maintien est montée à l'extérieur du carter.

D'une manière générale la solution est simple, fiable, économique et permet malgré la fente de bien caler axialement le roulement à billes ; un bon contact entre la plaquette de maintien et le roulement à billes se produisant.

Grâce à l'invention on n'a pas besoin d'effectuer un préencollage des vis, notamment d'une partie de la partie filetée de celles-ci, pour éviter que celles-ci ne se desserrent.

On peut utiliser des vis auto-taraudeuses ce qui est économique car il n'y a plus besoin de tarauder les trous de fixation réalisés dans le palier avant.

Avantageusement dans tous les cas les vis de fixation sont dépourvues de moyen de collage intervenant entre les vis et les trous de fixation pour éviter leur desserrage

La plaquette de maintien, pour économiser de la matière et favoriser la ventilation, peut avoir une forme carrée, rectangulaire, triangulaire voir même polygonale.

Avantageusement la plaquette de maintien comporte au moins une encoche distincte de la fente débouchante pour améliorer encore la souplesse du montage.

De préférence, pour donner encore plus de souplesse, des encoches sont ménagées à la périphérie externe et/ou interne de la plaquette de maintien.

Une au moins de ces encoches peut, en coopération avec une protubérance issue du palier avant, servir de détrompeur pour indexer angulairement la plaque afin que les vis de fixation soient dans la bonne position en face des trous de fixation avant leur vissage.

La bonne tenue aux vibrations du montage à plaquette de maintien permet de doter l'alternateur d'une barrière d'étanchéité adjacente à la bague interne du roulement à billes.

La fente s'étend perpendiculairement par rapport au côté de la plaquette dans lequel elle débouche ou en variante de manière inclinée.

Cette fente permet de diminuer les contraintes thermiques et de faire fonctionner l'alternateur à des températures plus importantes. La fente favorise une diminution des bruits.

D'autres caractéristiques et avantages de l'invention apparaîtront à la lecture de la description détaillée qui suit pour la compréhension de laquelle on se reportera aux dessins annexés dans lesquels :
- la figure 1 est une vue en demi-section axiale d'un alternateur réalisé conformément à l'invention ;
- la figure 2 est une vue de face de la pièce de maintien de la figure 1 ;
- les figures 3 à 6 sont des variantes de réalisation de la figure 2 ;
- la figure 7 est une vue en coupe selon la ligne 7-7 de la figure 6 ;
- la figure 8 est une vue partielle en coupe pour un sixième exemple de réalisation de l'invention.

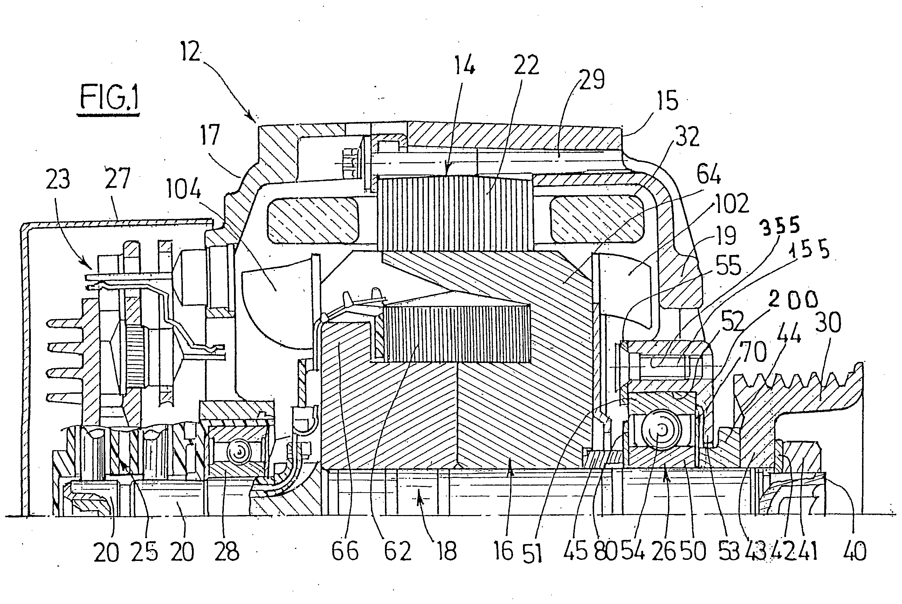

Dans la suite de la description, afin de faciliter la compréhension de la description, une orientation avant arrière sera utilisée conformément à l'orientation de droite à gauche de la figure 1 et les éléments communs aux figures seront affectés des mêmes signes de référence.

On a représenté à la figure 1 un alternateur polyphasé, ici triphasé, pour véhicule automobile constitué principalement d'un carter 12 en deux parties 15,17 reliées à la masse du véhicule automobile et portant intérieurement deux organes principaux qui sont un stator 14 et un rotor 16 comme décrit par exemple dans le document US-A-5270 605 (EP-B-0 515 259) auquel on se reportera pour plus de précisions. Les parties 15,17 comportent des pattes pour leur fixation à une partie fixe du véhicule.

Le stator 14 entoure le rotor 16, qui est solidaire d'un arbre 18 de rotor sur l'extrémité arrière duquel deux bagues collectrices 20 sont fixées, tandis qu'une poulie 30 est solidaire de l'extrémité avant de l'arbre 18. Cette poulie, ici rainurée, est destinée à recevoir une courroie de forme complémentaire faisant partie d'un dispositif de transmission de mouvement entraîné par le moteur à combustion interne du véhicule automobile.

Le stator 14 est composé d'un corps 22 qui est ici constitué principalement par un empilement axial de tôles transversales en fer doux.

La face annulaire intérieure du corps 22 comporte des rainures axiales, qui s'étendent radialement vers l'extérieur et qui reçoivent des brins axiaux de bobinages électriques 32. Les rainures sont ouvertes vers l'intérieur comme visible par exemple dans le document FR A 2 603 429.

Chaque bobinage électrique 32 est par exemple constitué par l'enroulement en spires d'un élément conducteur électrique, ici un fil de cuivre, qui est revêtu d'au moins une couche en matériau isolant électrique par exemple un polyester en deux couches l'une du type polyimide, l'autre du type polyamide imide permettant une bonne fixation dans les rainures.

Les brins axiaux sont prolongés par des brins de jonction transversaux qui forment des chignons (non référencés) s'étendant en saillie de part et d'autre du corps 22 du stator 14, conformément à la figure 1.

En variante, il est fait appel à des conducteurs sous la forme de barres, telles que des épingles en forme de U, de section circulaire on rectangulaire montées dans les rainures axiales du stator 14 comme décrit dans le document WO-92/06527. En variante quatre éléments électriquement conducteur sont montés radialement à superposition par rainure comme décrit dans la demande FR 01 04770 déposée le 05/04/2001 et publié sous le numéro FR A 2 820 896 ou dans le document WO 02/50976 .

Le rotor 16 est ici un rotor à griffes doté d'un bobinage électrique 62 d'excitation cylindrique, qui est monté entre deux plateaux 64 et 66 métalliques comportant chacun à leur périphérie externe des dents, qui s'étendent axialement en direction de l'autre plateau 66 et 64. Les extrémités du bobinage 62 sont reliées aux bagues 20 de manière connue par des liaisons filaires. Les plateaux 66,64 sont ici prolongés à leur périphérie interne par une portion cylindrique pour porter le bobinage 62. En variante un noyau cylindrique est monté sur l'arbre 18 et est intercalé entre les deux plateaux pour porter le bobinage 62.

Chaque ensemble plateau-griffes constitue une roue polaire ici en acier magnétique. Chaque roue polaire est fixée sur l'arbre à la faveur de parties moletées de cet arbre 18. Les dents sont décalées angulairement d'une roue à l'autre de manière qu'une dent du plateau 64 s'intercale entre deux dents adjacentes du plateau 66, et inversement. Pour plus de précisions, on se reportera au document EP-B-0.515.259 montrant également les autres constituants de l'alternateur. L'alternateur est donc ici à ventilation interne, chaque plateau 64,66 portant un ventilateur respectivement 102,104 adjacent à la partie 15,17 concernée du carter.

Chaque partie 15,17 de carter 12 est ajourée pour circulation de l'air et porte centralement un roulement à billes 26,28 pour support à rotation respectivement de l'extrémité avant et arrière de l'arbre 18. Ainsi l'une de ces parties est appelée palier avant 15 (celle adjacente à la poulie 30) et l'autre palier arrière 17. Le palier arrière 17 porte un agencement de redressement 23 du courant alternatif produit par le stator et un porte-balais 25, dont les balais coopèrent avec les bagues collectrices 20.

Il est en outre prévu un capot de protection 27 ajouré solidaire du palier arrière 17 et coiffant, d'une part, le porte-balais 25, connecté de manière connue à un dispositif de régulation pour réguler le courant et la tension du bobinage 62, et, d'autre part, l'agencement de redressement 23, doté de diodes montées ici tête-bêche comme visible à la figure 1. L'agencement de redressement 23 comporte le palier arrière 17 portant les diodes dites négatives, un radiateur métallique positif portant les diodes dites positives et un connecteur interposé entre le palier arrière et le radiateur positif pour notamment relier les diodes comme décrit dans le document FR A 2 734 425 auquel on se reportera pour plus de précisions. Ici le ventilateur 104 est plus puissant que le ventilateur 102 pour notamment bien refroidir l'agencement 23.

Les paliers avant 15 et arrière 17 sont métalliques, ici à base d'aluminium, en étant de forme creuse délimitée par un flasque transversal portant le roulement à billes 26,28 concerné et par un rebord périphérique d'orientation axiale dont un est ici intérieurement épaulé pour porter l'empilement de tôles du corps du stator à la faveur de vis 29 en appui sur une couronne appartenant à une entretoise annulaire(non référencée) avec un repli d'appui sur le palier 15 pour serrer le corps 22 entre la couronne et l'épaulement précité. En variante le palier 17 présente également un épaulement en sorte que le corps 22 est serré entre les deux épaulements des paliers 15,17.

Les flasques et les rebords, de manière connue, présentent des ouvertures pour circulation de l'air. Ainsi les rebords présentent des ouvertures de sortie d'air en regard des extrémités axiales des bobinages 32, appelées chignons, s'étendant en saillie axiale par rapport au corps 22 du stator 14, tandis que les flasques présentent des ouvertures d'entrée d'air en regard des pales des ventilateurs 102,104. Ces paliers sont reliés à fixation à l'aide de vis ou de tirants comme visible par exemple à la figure 1 du document EP B 0 515 259 précité. En variante un unique ventilateur est implanté à l'extérieur au niveau de la poulie. En variante les paliers 15,17 sont dotés intérieurement de canaux pour circulation d'un liquide de refroidissement, tel que le fluide de refroidissement du moteur du véhicule automobile. Dans ce cas on peut prévoir également au moins un ventilateur solidaire du rotor et générant un flux axial.

La poulie 30 est intérieurement creuse pour logement de l'extrémité avant fileté 40 de l'arbre 18, d'un écrou 41 et d'une rondelle d'appui 42 intercalée entre le fond transversal 43 de la poulie 18 et l'écrou 41 vissé sur l'extrémité filetée 40. En variante l'écrou présente une embase en sorte que la présence de la rondelle 42 n'est pas obligatoire. En variante la poulie est une poulie à roue libre

En variante la poulie est emmanchée à force sur un tronçon externe cannelé de l'arbre comme décrit dans la demande FR 02 03803 déposée le 22/03/2002. Par exemple la poulie comporte à un tronçon interne cannelé pour son emmanchement à force sur un tronçon externe cannelé de l'arbre. Cette disposition est avantageuse lorsque l'alternateur est réversible comme décrit par exemple dans le document WO 01/69762.

La présence de l'écrou n'est donc pas indispensable.

Le fond 43 est troué centralement, ainsi qu'une première entretoise annulaire 44 et une deuxième entretoise annulaire 45, pour passage de l'arbre 18. La bague intérieure 50 du roulement à billes 26 est montée à serrage sur une portion lisse de l'arbre 18 ; les entretoises 44,45 étant montées de part et d'autre de cette bague 50. La bague extérieure 51 du roulement 26 est montée à serrage dans un logement ménagé à la périphérie interne du flasque transversal 19 du palier avant 15, c'est à dire centralement dans le palier avant 15. La poulie permet un serrage axial des composants précités.

Le logement appartient à une âme centrale cylindrique 200, constituant un moyeu, du palier 15 saillante axialement en direction du rotor 16 et est délimité par une portée annulaire d'orientation axiale 52 prolongée, à son extrémité avant, radialement vers l'intérieur par une paroi transversale 53 entourant à faible jeu la première entretoise 44. La portée 52 et la paroi 53 délimitent intérieurement l'âme 200.

La face avant de la bague 51 est en appui sur la périphérie externe de la portion 53, tandis que la face arrière de la bague 51 est au contact avec la périphérie interne d'une pièce de maintien 55 fixée par des vis 155 sur le flasque 19, plus précisément sur des bras saillants axialement et radialement de l'âme 200, au-dessus de la portée 52 en contact avec la périphérie externe de la bague externe 51. La portée 52 est ainsi une portée de montage et la bague 51 est serrée axialement entre la pièce 55, servant à caler axialement la bague 51 dans un sens, et la paroi 53 calant la bague 51 axialement dans l'autre sens.

La première entretoise annulaire 44 est implantée axialement entre le fond 43 de la poulie 30 et la bague interne 50 du roulement à billes 26.

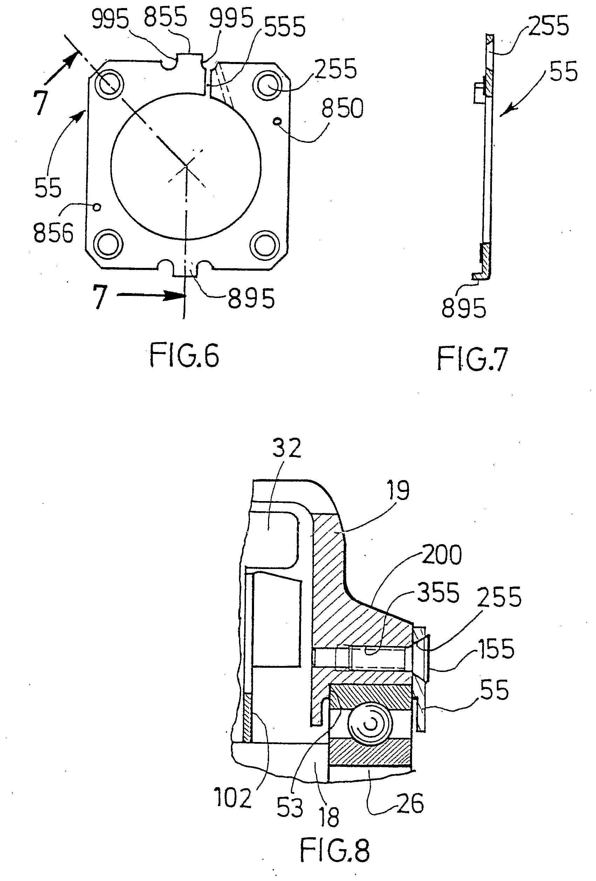

Les vis 155 sont ici à tête fraisée pour réduire l'encombrement axial et la pièce de maintien 55 présente des trous tronconiques 255, mieux visibles dans les figures 6 et 7, pour le passage de la partie filetée des vis 155 et appui des têtes des vis 155 sur le bord des trous 255, comme visible à la figure 1, afin de fixer par serrage la plaquette ici sur la face arrière de l'âme 200, ici sur les bras précités de l'âme 200.

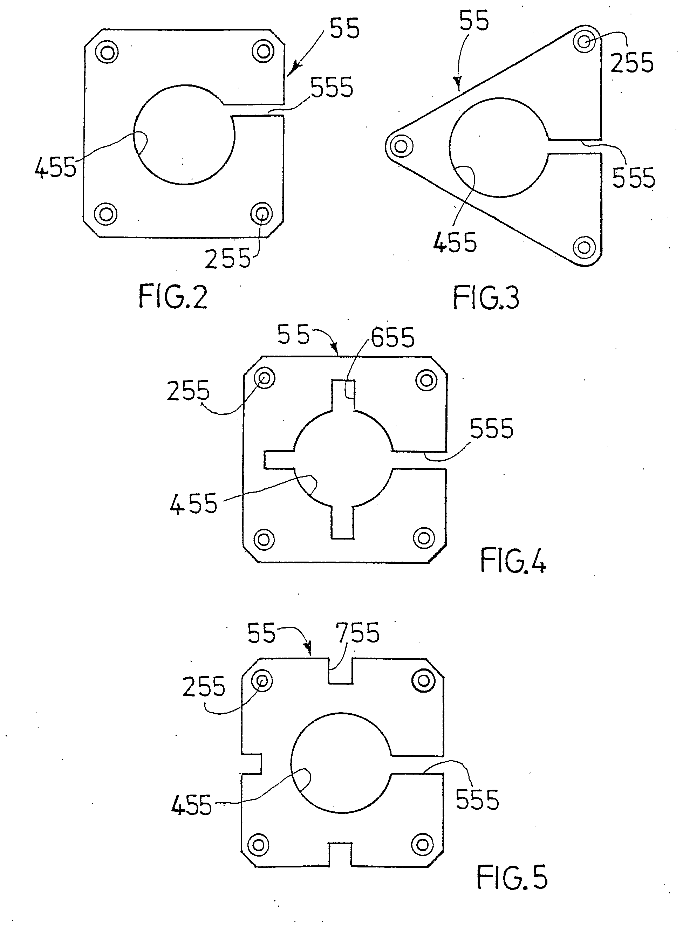

La pièce de maintien 55 est plate et a une forme globalement rectangulaire à la figure 2 pour économiser la matière et ne pas obturer les entrées d'air du flasque 19. Cette pièce 55 présente quatre trous 255 implantés au niveau de ses coins pour sa fixation sur le palier avant à l'aide de quatre vis 155.

Pour ce faire le palier avant 15 présente des trous taraudés 355 de fixation (figure 1) pour le vissage de la partie filetée des vis 155 de fixation de la pièce 55.

Les trous 355 sont implantés ici dans les bras de l'âme 200 radialement à l'extérieur de la portée 52.

On notera que les têtes des vis de fixation 155 sont adjacentes au flasque transversal (non référencé) que comporte le ventilateur 102, ici en tôle, pour sa fixation, par exemple à l'aide de points de soudure, sur le plateau 64 de la roue polaire arrière.

Ce ventilateur 102 comporte des pales (non référencées) engendrant ici un flux d'air radial en variante axial et radial.

De manière précitée le palier avant présente des ouvertures au niveau de son flasque 19. Ces ouvertures sont des ouvertures d'aspiration d'air de grande taille implantées en regard des pales du ventilateur 102 et sont délimitées intérieurement par l'âme ou moyeu 200.

Les vis 155 s'étendent radialement à l'intérieur des pales ainsi que les trous 255, 355 et donc l'âme 200 et le logement délimité par la portée 52 et la paroi 53.

La pièce de maintien 55, grâce aux caractéristiques de l'invention décrites ci-après, est relativement mince et consiste ici en une plaquette de maintien métallique globalement de forme plate. Cette pièce 55 est donc mince et économique.

La pièce 55 est avantageusement en tôle et présente, de manière connue, centralement une ouverture 455, ici cylindrique, pour notamment le passage de l'arbre 18 et délimiter une portée annulaire de contact avec la face arrière de la bague extérieure 51.

On appréciera que l'encombrement axial de l'alternateur est réduit.

Pour diminuer les contraintes, notamment mécaniques, et éviter une déformation de la plaquette 55 suite à sa fixation sur le palier avant à l'aide des vis 155, on dote selon l'invention cette plaquette d'une fente 555 débouchante s'étendant de l'ouverture centrale 455 jusqu'à la périphérie externe de la plaque.

Dans les figures 2, 6 et 7, il est prévu une fente 555 décentrée par rapport au centre de l'ouverture 455, qui débouche dans l'ouverture centrale 455 et à la périphérie externe de la plaquette 55 de manière non symétrique par rapport au côté de la plaquette 55 qu'elle affecte. En variante la fente est radiale c'est à dire que son axe de symétrie passe par le centre de l'ouverture circulaire 455 et débouche de manière non symétrique dans le côté de la plaquette qu'elle affecte. En variante, comme visible dans les figures 3 à 5, la fente est radiale et débouche de manière symétrique par rapport au côté de la plaquette de maintien qu'elle affecte.

Cette plaquette 55 présente donc une souplesse en sorte que toutes les vis 155 à tête fraisée sont bien en prise avec les trous associés 255 de la plaquette.

On obtient également un bon contact entre la périphérie interne de la plaquette 55 et la bague extérieure 51 du roulement à billes qui est ainsi bien calé axialement.

Les contraintes mécaniques radiales et axiales engendrées par le serrage des vis 155 sont réduites. La plaquette peut également se dilater plus facilement grâce à la fente.

L'assemblage de la plaquette 55 sur le palier 15 n'est donc pas hyperstatique en sorte que les vis 155 ont une bonne tenue en vibrations.

Il n'y a donc pas besoin de déposer une couche de colle sur les vis 155 ou tout autre moyen de collage pour éviter un desserrage des vis.

Avantageusement les vis 155 sont auto-taraudeuses en sorte que les trous de fixation 355 sont lisses, chaque vis 155 créant lors de la fixation de la plaquette de maintien 55 un filetage dans son trou 355 associé. On réduit ainsi les coûts.

Dans les modes de réalisation des figures 1 à 7 le palier avant 15 comporte des trous de fixation 355 pour le montage des vis de fixation 155 présentant une tige traversant les ouvertures 255 de la plaquette 55 et une tête en appui sur cette plaquette pour son serrage au contact de l'extrémité arrière de l'âme 200.

En variante (figure 8) on inverse les structures en sorte que la tête des vis 155 prend appui sur la face externe du palier avant présentant alors un trou tronconique pour chaque tête de vis. Le trou 355 est alors un trou de passage de la tige filetée de la vis 155, qui se visse dans un trou taraudé de la plaquette. Les trous 255 de la plaquette 55 sont alors taraudés.

La bonne tenue en vibrations permet le montage d'au moins une barrière d'étanchéité 70 décrite ci-après.

Plus précisément de manière connue les bagues 50,51 présentent des pistes pour les billes 54 interposées radialement entre les bagues 50,51. Le roulement 26 est ici à une rangée de billes, en variante à deux rangées de billes, et est avantageusement lubrifié classiquement à l'aide de graisse et des joints solidaires de la bague externe 51 sont prévus à chaque extrémité axiale du roulement pour éviter à la graisse de s'échapper en sorte que le roulement 26 est étanche. Une cage est prévue pour retenir les billes 54.

A la figure 1, on a représenté par des traits les joints (non référencés) du roulement 26. Ces joints sont en retrait par rapport aux extrémités axiales du roulement 26. Les joints sont solidaires de la bague externe 51 du roulement et sont en contact avec la périphérie externe de la bague interne 50.

La première entretoise 44 est de forme tubulaire présentant à son extrémité avant un rebord annulaire d'orientation transversale pour contact avec le fond 43. En variante la première entretoise est d'un seul tenant avec le fond 43 alors plus épais. La deuxième entretoise 45 est de forme tubulaire et est implantée axialement entre la bague interne 50 du roulement 26 et le plateau 64 de la roue polaire adjacente. L'arbre 18 est épaulé au niveau de la face arrière du plateau 66 de l'autre roue polaire.

Ainsi en serrant l'écrou 41 prenant appui sur la rondelle 42, on immobilise axialement, par l'intermédiaire des entretoises 44,45, la poulie 43, la bague 50 et les plateaux 64,66 fixes en rotation grâce aux moletages de l'arbre 18 plus dure que les plateaux 64,66 pour tailler des sillons lors de l'emmanchement à force de l'arbre 18 dans les alésages centraux des plateaux 66,64. En variante c'est la poulie qui assure le serrage lorsque celle-ci est emmanchée à force sur l'arbre de manière précitée.

La poulie 30 est donc solidaire en rotation de l'arbre 18 grâce au serrage réalisé. La bague 50 est également solidaire en rotation de l'arbre 18 car elle est emmanchée à force sur celui-ci. Cet emmanchement est moins serré que l'emmanchement de la bague externe 51 dans la portée 52.

De l'eau peut pénétrer au niveau du roulement à billes 26 notamment dans le cas d'expositions excessives à l'eau. Ceci est notamment le cas pour les véhicules dits 4x4. Dans ce cas l'eau peut être chargée de particules et être boueuse.

Une barrière 70 contre la pénétration de l'eau est implantée axialement entre le roulement à billes 26 et la paroi transversale 53 centrale du palier avant 15.

La barrière 70 est plaquée contre la bague interne 50.

La barrière 70 est traversée par l'arbre 18 et est ici pincée à sa périphérie interne entre la première entretoise 44 et la bague interne 50 du roulement 26 de plus grande taille que le roulement 28 du palier arrière 17 en sorte que cette barrière est solidaire en rotation de la bague interne 50, de la poulie 30 et du rotor 16.

En variante la barrière 70 est fixée de manière imperdable sur la bague interne 50. La fixation est réalisée par soudage. En variante la fixation est réalisée par encliquetage, la barrière comportant à sa périphérie interne des pattes ou des crochets pénétrants chacun par encliquetage dans une dépression ménagée à la périphérie interne de la bague interne 50 au voisinage de l'extrémité axiale concernée de la bague 50. La dépression est délimitée par une saillie, qui est franchie par la patte ou le crochet lors de l'opération d'encliquetage. En variante les crochets sont reliés entre eux de manière continue.

A l'extérieur de ladite bague interne (radialement au-dessus de la bague 50) un faible jeu existe axialement entre le joint adjacent du roulement à billes 26 et la barrière 70 pour éviter tout contact entre la barrière 70 et ce joint d'étanchéité adjacent que comporte de manière précitée le roulement à billes 26 entre ses bagues 50,51 pour retenir la graisse du roulement 26. La présence de la plaquette 55 à fente 555 permet de garantir qu'aucun contact ne se produira avec la barrière.

Un faible jeu axial existe entre la paroi transversale 53 et la barrière 70 pour éviter les usures entre deux pièces rotatives l'une par rapport à l'autre et mieux éviter la pénétration de l'eau chargée de particules ou toute autre souillure.

La barrière 70 s'étend radialement jusqu'au voisinage de la périphérie interne de la bague externe 51 pour protéger le plus possible l'espace entre les deux bagues 50,51. Un faible jeu radial existe donc entre la barrière et la bague externe 51 pour passage d'air. En variante la barrière s'étend jusqu'au voisinage du diamètre moyen des billes 54 en sorte que le jeu radial est plus important.

Lors du fonctionnement de l'alternateur un mouvement relatif se produit entre la barrière 70 et le joint adjacent du roulement solidaire de la bague externe 51 en sorte qu'un mouvement d'air se produit ce qui empêche la pénétration de l'eau.

La barrière 70 est implantée à la faveur d'une réduction d'épaisseur que comporte la paroi transversale 53 en dessous de la bague externe 51 du roulement 26 comme visible à la figure 1. Cette disposition permet de ne pas augmenter l'encombrement de l'alternateur, tout en ayant une paroi 53 suffisamment robuste pour l'appui de la face avant de la bague 51. Ici la réduction d'épaisseur de la paroi transversale 53 est réalisée en dessous du diamètre moyen de la bague 51.

La barrière 70 consiste avantageusement en une simple rondelle métallique fine et économique. Cette rondelle plane, avantageusement en forme de clinquant, permet globalement de ne pas augmenter globalement l'encombrement axial de l'alternateur.

La rondelle 70 est, en variante, à sa périphérie externe légèrement inclinée en direction de la paroi 53. En variante la rondelle porte à sa périphérie externe un bourrelet dirigé vers la paroi 53 pour réduire au minimum l'espace entre la rondelle 70 et la paroi et éviter encore plus la pénétration de l'eau. Bien entendu on peut remplacer le bourrelet par toute forme appropriée permettant de réduire le jeu entre la rondelle 70 et la paroi 53. La rondelle 70 en variante présente des reliefs en dessous de sa périphérie externe pour créer des chicanes empêchant l'eau de passer. Les reliefs sont dirigés à l'opposé du roulement.

Avantageusement une barrière 80 supplémentaire, traversée par l'arbre du rotor 16, est montée du côté du roulement à billes 26 opposé à la première barrière 70 pour s'opposer à la pénétration de l'eau entre les deux bagues au niveau de la face arrière du roulement 26. La barrière 80 supplémentaire est plaquée contre la bague interne et est solidaire en rotation de la bague intérieure 50 du roulement à billes 26 et de la poulie 30 comme la barrière 70.

Plus précisément la barrière supplémentaire 80 est ici pincée à sa périphérie interne entre la bague interne 50 et la deuxième entretoise 45 intercalée axialement entre la bague interne 50 et le plateau 64 solidaire de l'arbre 18 et appartenant à la roue polaire adjacente du rotor.

En variante la barrière 80 est imperdable en étant fixée sur la bague interne 50 de la même manière que la barrière 70 par exemple par soudage ou encliquetage.

A l'extérieur de ladite bague interne (radialement au-dessus de la bague 50) un faible jeu existe axialement entre le joint concerné du roulement à billes 26 et la barrière supplémentaire 80 s'étendant radialement jusqu'au voisinage de la périphérie interne de la bague externe 51. Un faible jeu radial existe entre la bague externe 51 et la barrière 80. Ce faible jeu est garanti par la plaquette 55 non déformée par le serrage des vis 155. En variante la barrière s'étend jusqu'au voisinage du diamètre moyen des billes 54 en sorte que le jeu radial est pus important. On évite ainsi toute interférence entre cette barrière 80 et le deuxième joint d'étanchéité que comporte de manière précitée le roulement 26 entre ces deux bagues pour s'opposer à la sortie de la graisse de lubrification du roulement tout en protégeant au mieux l'espace entre les deux bagues 50,51 et en favorisant un mouvement de l'air entre la barrière 80 et le joint adjacent du roulement 26.

La barrière supplémentaire 80 consiste en une simple rondelle plane métallique et fine pour les mêmes raisons que la rondelle 70. La rondelle 80 est logée à l'intérieur de la plaquette 55 dans l'ouverture centrale 455 de celle-ci.

L'encombrement axial de l'alternateur est donc augmenté au minimum de manière simple et économique. Les rondelles 70, 80 en forme de clinquant ont par exemple une épaisseur de 0,3 mm. La rondelle 80 présente en variante des formes à sa périphérie externe, tel qu'un bourrelet, et/ou des reliefs dirigés à l'opposé du roulement comme la rondelle 70. En variante la rondelle 80 est inclinée à sa périphérie externe en direction opposée aux billes 54.

En se reportant à la figure 1 on voit, du fait de la présence du rebord transversal annulaire de l'entretoise 44, qu'un labyrinthe de protection du roulement existe entre la première entretoise 44, éventuellement d'un seul tenant avec la poulie, et la paroi transversale 53 centrale du palier avant 15. Ce labyrinthe est obturé par la rondelle 70 en sorte que le roulement 26 est bien protégé.

En variante l'une au moins des rondelles 70,80 est plane l'extrémité axiale concernée de la bague 50 s'étendant en saillie axiale par rapport à la bague externe 51.

En variante l'une au moins des rondelles 70,80 comporte une partie externe décalée axialement en direction opposée au roulement par rapport à sa périphérie interne pincée entre l'entretoise concernée et la bague 50. Les rondelles 70,80 peuvent avoir des hauteurs différentes ou être de même hauteur. Ces rondelles 70, 80 ont une épaisseur inférieure à celle de la plaquette 55.

Bien entendu la présente invention n'est pas limitée aux exemples de réalisation décrits.

Ainsi la plaquette de maintien du roulement 26 peut avoir une forme carrée ou polygonale.

A la figure 3 la plaquette de maintien 55 est de forme triangulaire et comporte trois trous 255 implantés au voisinage des sommets du triangle. La fente 555 débouche dans l'ouverture centrale 455 et à la périphérie externe de la plaquette de manière symétrique par rapport au côté du triangle qu'elle affecte en sorte que la fente est d'orientation radiale ; son axe de symétrie passant par le centre de l'ouverture 455.

La fente 555 est avantageusement associée à des encoches pour donner encore plus de souplesse à la plaquette de maintien.

Ainsi à la figure 4 des évidements internes 655,555 sont réalisés à la périphérie interne de la plaquette de maintien 55.

Les évidements sont répartis à partir de l'ouverture 455 circonférentiellement de manière régulière en étant diamétralement opposés deux à deux.

Trois des évidements 655 consistent en des encoches débouchant dans l'ouverture centrale 455, le quatrième évidemment 555 étant constitué par la fente 555 selon l'invention, qui débouche dans l'ouverture 455 et de manière symétrique à la périphérie externe de la plaquette 55.

En variante (figure 5) la plaquette de maintien 55 comporte à sa périphérie externe quatre évidements externes répartis de manière régulière à la périphérie externe de la plaquette 55 à raison d'un évidemment par côté de la plaquette 55.

Les évidements sont implantés de manière médiane (symétrique) entre deux trous 255 associés aux vis de fixation en sorte que les évidements sont diamétralement opposés, c'est à dire alignés, deux à deux.

Trois des évidements consistent en des encoches 755 débouchantes à la périphérie externe de la plaquette 55

Le quatrième évidement est constitué par la fente 555, qui débouche à la périphérie externe de la plaquette 55 et dans l'ouverture centrale 455.

L'une au moins des encoches 655,755 peut servir à l'indexation angulaire de la plaquette de maintien.

Ainsi le palier avant 15 présente au moins une protubérance pénétrant dans une encoche 655,755.

De préférence, deux protubérances issues du palier 15, ici de la face arrière de l'âme 200, sont prévues.

Chaque protubérance pénètre dans une encoche 655,755.

Les deux encoches associées aux protubérances sont avantageusement diamétralement opposées et distinctes de l'encoche associée à la fente.

Bien entendu en variante une seule encoche 655,755 distincte de la fente 555 est prévue. L'encoche est avantageusement diamétralement opposée à la fente 555 par rapport à l'ouverture 455, c'est à dire alignée avec la fente ; la fente 555 et l'encoche étant disposées de part et d'autre de l'ouverture 455.

On peut prévoir des encoches à la périphérie interne et à la périphérie externe de la plaquette de maintien ici en tôle.

Par exemple une seule encoche interne 655, diamétralement opposée à la fente 555, est prévue et deux autres encoches externes 755 diamétralement opposées affectent la périphérie externe de la plaquette de maintien en étant réparties de manière régulière avec la fente 555 et l'encoche 655. Toutes les combinaisons sont possibles.

En variante (figures 6 et 7) la plaquette de maintien présente à sa périphérie externe au moins un ergot 855. Ici la plaquette 55 comporte à sa périphérie externe deux ergots 855, en forme de pattes pliées en équerre, pénétrant chacune dans un évidemment ménagé dans la face arrière de l'âme 200, ici dans les bras de l'âme, du palier avant pour indexation angulaire de la plaquette de maintien. Chaque ergot 855 s'étend perpendiculairement au plan de la plaquette 55 et est formé par pliage à 90° d'une patte délimitée par deux dégagements arrondis 995 symétriques pour pliage précis de la patte. Les dégagements 995 s'étendent de part et d'autre d'une patte. Les pattes de formation des ergots 855 sont initialement radialement alignées.

Dans ce mode de réalisation la fente 555 est de manière précitée décentrée et s'étend de l'ouverture centrale 455 jusqu'à l'un des dégagements arrondis 995 réalisé pour la formation de l'un des ergots 855. En variante les dégagements ont une autre forme.

Dans ces figures 6 et 7 on notera que les trous tronconiques 255 sont implantés sur une même circonférence. Bien entendu on peut prévoir dans ce mode de réalisation des encoches externes ou internes réparties à 90° par rapport aux ergots 855.

Dans toutes les figures la fente 555 s'étend perpendiculairement au côté de la plaquette dans lequel elle débouche. En variante la fente est inclinée par rapport au côté de la plaquette 55 dans lequel elle débouche. Cette disposition est intéressante dans le cadre des figures 6 et 7, comme représenté en pointillés car dans ce cas il y a plus de matière entre l'ergot 855 et la fente.

La plaquette 55 est dans toutes les figures 1 à 5 plane abstraction faite des ergots 855, sa zone de contact avec la bague 51 étant plane.

Bien entendu, comme visible à la figure 6 on peut emboutir localement la plaquette 55 en dehors de sa zone d'appui avec la bague 51 pour formation d'au moins deux surélévations 850, 856 de faible taille permettant de bien séparer les plaquettes les une des autres lors de leur fabrication et de leur stockage avant assemblage sur le palier avant 15.

On notera que dans les figures 2 et 4 à 6 les coins de la plaquette 55 sont avantageusement chanfreinés.

Dans les figures précédentes la plaquette de maintien est montée à l'intérieur du carter 12 au contact de l'extrémité arrière de l'âme ou moyeu 200 ; en étant implantée axialement entre l'âme 200 et le plateau 64 de la roue polaire avant.

En variante (figure 8) on inverse les positions en sorte que la plaquette 55 est montée à l'extérieur du carter 12 au contact de la face avant de l'âme 200, ici extérieurement en forme de tronc de cône. Dans ce cas la portée 53 est ménagée au niveau de l'extrémité arrière de l'âme 200 et la plaquette 55 présente à sa périphérie externe une augmentation d'épaisseur pour contact avec la bague extérieur du roulement 26 en sorte qu'elle est étagée en épaisseur ; l'une de ses faces étant plane. Il peut en être de même dans les autres figures.

La plaquette 55 est implantée axialement entre l'âme 200 et la poulie (non visible). Bien entendu des encoches peuvent être prévues comme dans les autres figures ; les protubérances étant venues de la face avant de l'âme. La partie avant de l'âme comporte en variante deux évidements pour réception des ergots 855 des figures 6 et 7.

Bien entendu dans le cadre de cette figure 8, de manière précitée, on peut inverser la position de la tête des vis 155, qui alors viennent en appui sur la face arrière de l'âme 200 dotée de trous tronconiques à cet effet, tandis que les tiges des vis 155 traversent chacune un passage 355 pour se visser dans un trou taraudé de la plaquette 55.

En variante les vis de fixation 155 sont à tête plate ou bombée en sorte qu'en variante les trous 255 sont cylindriques, les têtes prenant appui sur la face de la plaquette de maintien tournée vers le rotor 16 ou la poulie 30.

La plaquette de maintien est ici métallique. Bien entendu on peut utiliser une autre matière.

La présence des barrières 70, 80 n'est pas obligatoire comme visible à la figure 8.

En variante l'alternateur est du type réversible et constitue également un démarreur pour démarrer le moteur du véhicule. Ce type de machine électrique tournante appelée alterno-démarreur de manière précitée est décrit par exemple dans la demande FR 0103237 déposée le 09/03/2001. Un porte cible est dans ce cas interposé entre le plateau 66 et le roulement arrière 28 et l'agencement de redressement comporte des transistors du type MOS. Dans ce document la première entretoise est d'un seul tenant avec la poulie ce qui en variante est une solution possible.

## Revendications

1. Alternateur pour véhicule automobile comportant un rotor (16) solidaire d'un arbre de rotor (18) et monté à l'intérieur d'un carter (12) comprenant un palier avant (15) doté centralement d'un logement délimité par une portée annulaire d'orientation axiale (52) et par une paroi transversale (53) pour le montage d'un roulement à billes (26) supportant à rotation l'extrémité, dite extrémité avant, de l'arbre de rotor (18), dans lequel la bague extérieure (51) du roulement à billes est serrée axialement entre la paroi transversale (53) et une pièce de maintien (55) fixée sur le palier avant (15) à l'aide de vis de fixation (155) montées dans des trous de fixation ou de passage (355) du palier avant (15) et dans lequel la pièce de maintien (55) est en forme de plaquette présentant une ouverture centrale (455) traversée par l'arbre de rotor (18) et délimitant une portée de contact avec la bague extérieure (51) du roulement à billes (26), **caractérisé en ce que** la plaque de maintien (55) présente une fente débouchante (555) s'étendant de l'ouverture centrale (455) jusqu'à la périphérie externe de la pièce de maintien (55) .

2. Alternateur selon la revendication 1, **caractérisé en ce que** les têtes des vis de fixation(155) prennent appui sur la plaquette de maintien (55), **en ce que** le palier avant (15) présente des trous lisses de fixation (335) pour les vis de fixation (155) et **en ce que** les vis de fixation (155) sont auto-taraudeuses pour formation d'un filetage dans chaque trou de fixation(355).

3. Alternateur selon la revendication 1 ou 2, **caractérisé en ce que** les vis de fixation (155) présente des têtes fraisées et la plaquette de maintien (55) des trous tronconiques (255) pour appui des têtes des vis de fixation (155).

4. Alternateur selon l'une quelconque des revendications précédentes, **caractérisé en ce que** les vis de fixation (155) sont dépourvues de moyen de collage pour éviter leur desserrage.

5. Alternateur selon l'une quelconque des revendications précédentes, **caractérisé en ce que** la plaquette de maintien (55) est montée à l'intérieur du carter(12).

6. Alternateur selon l'une quelconque des revendications 1 à 4, **caractérisé en ce que** la plaquette de maintien (55) est montée à l'extérieur du carter(12).

7. Alternateur selon l'une quelconque des revendications précédentes, **caractérisé en ce que** la plaquette de maintien (55) présente au moins une encoche (655, 755) distincte de la fente débouchante (555) à l'une de ses périphéries externe et interne.

8. Alternateur selon la revendication 7, **caractérisé en ce que** la plaque de maintien (55) présente à l'une des ses périphéries interne et/ou externe plusieurs encoches (5655,755) réparties de manière régulière avec la fente débouchante (555).

9. Alternateur selon la revendication 7 ou 8, **caractérisé en ce que** le palier avant (15) présente au moins une protubérance pénétrant dans une encoche (655,755) pour indexation angulaire de la plaquette de maintien(55).

10. Alternateur selon l'une quelconque des revendications 1 à 8, **caractérisé en ce que** la plaquette de maintien (55) comporte au moins un ergot (855) s'étendant perpendiculairement au plan de la plaquette (55) pour pénétration dans un évidemment du palier avant (15) et indexation angulaire de la plaque de maintien (55), **en ce que** l'ergot (855) est délimité par deux dégagements (995) s'étendant de part et d'autre de l'ergot (855) et **en ce que** la fente (555) débouche dans l'un des dégagements (995).

11. Alternateur selon l'une quelconque des revendications précédentes, **caractérisé en ce que** la fente (55) s'étend perpendiculairement au côté de la plaquette de maintien (55) dans lequel elle débouche.

12. Alternateur selon l'une quelconque des revendications précédentes, **caractérisé en ce que** la fente (55) s'étend de manière inclinée par rapport au côté de la plaquette de maintien (55) dans lequel elle débouche.

13. Alternateur selon l'une quelconque des revendications précédentes, **caractérisé en ce que** la plaquette de maintien (55) consiste en une plaquette métallique.

14. Alternateur selon l'une quelconque des revendications précédentes, **caractérisé en ce que** la plaquette de maintien (55) à une forme rectangulaire ou triangulaire.

15. Alternateur selon l'une quelconque des revendications précédentes, **caractérisé en ce que** l'arbre de rotor (18) porte à l'avant une poulie (30), **en ce qu'**une première entretoise (44) est intercalée entre la poulie (30) et la bague interne (50) du roulement à billes (26), **en ce qu'**une barrière (70) contre la pénétration de l'eau est, d'une part traversée par l'arbre de rotor (18) et, d'autre part, implantée axialement entre le roulement à billes (26) et la paroi transversale (53) du palier avant (15) en étant plaquée contre la bague interne (50) du roulement à billes (26) et **en ce que** la barrière (70) est solidaire en rotation de la bague intérieure (50) du roulement à billes (26) et de la poulie (30).

16. Alternateur selon l'une des revendications précédentes, **caractérisé en ce qu'**une barrière (80) supplémentaire contre la pénétration de l'eau est traversée par l'arbre du rotor (16) et est montée du côté du roulement à billes (26) opposé à la première barrière (70) et **en ce que** la barrière (80) supplémentaire est solidaire en rotation de la bague intérieure (50) du roulement à billes (26) et de la poulie (30) en étant plaquée contre la bague interne (50) du roulement à billes (26) et implantée à l'intérieur de l'ouverture centrale (455) de la plaquette de maintien (55).

## Patentansprüche

1. Wechselstromgenerator für ein Kraftfahrzeug, welcher einen Rotor (16) aufweist, der mit einer Rotorwelle (18) fest verbunden ist und im Inneren eines Gehäuses (12) angebracht ist, das ein vorderes Lager (15) umfasst, das mittig mit einer Aufnahme ausgestattet ist, die von einer axial ausgerichteten ringförmigen Auflagefläche (52) und von einer Querwand (53) für die Anbringung eines Kugellagers (26), in dem das "vorderes Ende" genannte Ende der Rotorwelle (18) drehbar gelagert ist, begrenzt wird, wobei der Außenring (51) des Kugellagers axial zwischen der Querwand (53) und einem Halteteil (55) eingespannt ist, das an dem vorderen Lager (15) mithilfe von in Befestigungs- oder Durchganslöchern (355) des vorderen Lagers (15) angebrachten Befestigungsschrauben (155) befestigt ist, und wobei das Halteteil (55) die Form einer Platte hat, die eine zentrale Öffnung (455) aufweist, die von der Rotorwelle (18) durchquert wird und eine Fläche des Kontakts mit dem Außenring (51) des Kugellagers (26) begrenzt, **dadurch gekennzeichnet, dass** die Halteplatte (55) einen durchgehenden Schlitz (555) aufweist, der sich von der zentralen Öffnung (455) bis zum Außenumfang des Halteteils (55) erstreckt.

2. Wechselstromgenerator nach Anspruch 1, **dadurch gekennzeichnet, dass** sich die Köpfe der Befestigungsschrauben (155) auf der Halteplatte (55) abstützen, dadurch, dass das vordere Lager (15) glatte Befestigungslöcher (335) für die Befestigungsschrauben (155) aufweist, und dadurch, dass die Befestigungsschrauben (155) selbstschneidend sind, zur Ausbildung eines Gewindes in jedem Befestigungsloch (355).

3. Wechselstromgenerator nach Anspruch 1 oder 2, **dadurch gekennzeichnet, dass** die Befestigungsschrauben (155) Senkköpfe aufweisen und die Halteplatte (55) kegelstumpfförmige Löcher (255) zur Abstützung der Köpfe der Befestigungsschrauben (155) aufweist.

4. Wechselstromgenerator nach einem der vorhergehenden Ansprüche, **dadurch gekennzeichnet, dass** die Befestigungsschrauben (155) nicht mit einem Klebmittel, um ihr Lösen zu verhindern, versehen sind.

5. Wechselstromgenerator nach einem der vorhergehenden Ansprüche, **dadurch gekennzeichnet, dass** die Halteplatte (55) im Inneren des Gehäuses (12) angebracht ist.

6. Wechselstromgenerator nach einem der Ansprüche 1 bis 4, **dadurch gekennzeichnet, dass** die Halteplatte (55) außerhalb des Gehäuses (12) angebracht ist.

7. Wechselstromgenerator nach einem der vorhergehenden Ansprüche, **dadurch gekennzeichnet, dass** die Halteplatte (55) wenigstens einen von dem durchgehenden Schlitz (555) verschiedenen Einschnitt (655, 755) entweder an ihrem Außenumfang oder an ihrem Innenumfang aufweist.

8. Wechselstromgenerator nach Anspruch 7, **dadurch gekennzeichnet, dass** die Halteplatte (55) an ihrem Innenumfang und/oder ihrem Außenumfang mehrere Einschnitte (5655, 755) aufweist, die zusammen mit dem durchgehenden Schlitz (555) gleichmäßig verteilt sind.

9. Wechselstromgenerator nach Anspruch 7 oder 8, **dadurch gekennzeichnet, dass** das vordere Lager (15) wenigstens einen Vorsprung aufweist, der zur Winkelpositionierung der Halteplatte (55) in einen Einschnitt (655, 755) eingreift.

10. Wechselstromgenerator nach einem der Ansprüche 1 bis 8, **dadurch gekennzeichnet, dass** die Halteplatte (55) wenigstens eine Nase (855), die sich senkrecht zur Ebene der Platte (55) erstreckt, zum Eingriff in eine Vertiefung des vorderen Lagers (15) und zur Winkelpositionierung der Halteplatte (55) aufweist, dadurch, dass die Nase (855) von zwei Aussparungen (995) begrenzt wird, die sich beiderseits der Nase (855) erstrecken, und dadurch, dass der Schlitz (555) in eine der Aussparungen (995) mündet.

11. Wechselstromgenerator nach einem der vorhergehenden Ansprüche, **dadurch gekennzeichnet, dass** sich der Schlitz (55) senkrecht zu der Seite der Halteplatte (55) erstreckt, in die er mündet.

12. Wechselstromgenerator nach einem der vorhergehenden Ansprüche, **dadurch gekennzeichnet, dass** sich der Schlitz (55) schräg bezüglich der Seite der Halteplatte (55) erstreckt, in die er mündet.

13. Wechselstromgenerator nach einem der vorhergehenden Ansprüche, **dadurch gekennzeichnet, dass** die Halteplatte (55) aus einer Metallplatte besteht.

14. Wechselstromgenerator nach einem der vorhergehenden Ansprüche, **dadurch gekennzeichnet, dass** die Halteplatte (55) eine rechteckige oder dreieckige Form hat.

15. Wechselstromgenerator nach einem der vorhergehenden Ansprüche, **dadurch gekennzeichnet, dass** die Rotorwelle (18) vorn eine Riemenscheibe (30) trägt, dadurch, dass ein erstes Distanzstück (44) zwischen der Riemenscheibe (30) und dem Innenring (50) des Kugellagers (26) angeordnet ist, dadurch, dass eine Sperre (70) gegen das Eindringen von Wasser einerseits von der Rotorwelle (18) durchquert wird und andererseits axial zwischen dem Kugellager (26) und der Querwand (53) des vorderen Lagers (15) eingesetzt ist, wobei sie gegen den Innenring (50) des Kugellagers (26) gedrückt wird, und dadurch, dass die Sperre (70) drehfest mit dem Innenring (50) des Kugellagers (26) und mit der Riemenscheibe (30) verbunden ist.

16. Wechselstromgenerator nach einem der vorhergehenden Ansprüche, **dadurch gekennzeichnet, dass** eine zusätzliche Sperre (80) gegen das Eindringen von Wasser von der Welle des Rotors (16) durchquert wird und auf der Seite des Kugellagers (26) angebracht ist, die der ersten Sperre (70) gegenüberliegt, und dadurch, dass die zusätzliche Sperre (80) drehfest mit dem Innenring (50) des Kugellagers (26) und mit der Riemenscheibe (30) verbunden ist, wobei sie gegen den Innenring (50) des Kugellagers (26) gedrückt wird und in das Innere der zentralen Öffnung (455) der Halteplatte (55) eingesetzt ist.

## Claims

1. Alternator for motor vehicle, comprising a rotor (16) fixedly attached to a rotor shaft (18) and mounted inside a casing (12) which comprises a front bearing (15) with a central housing delimited by an annular support region of axial orientation (52) and by a transverse wall (53) for mounting of a ball bearing (26) supporting the end, known as the front end, of the rotor shaft (18) in rotation, wherein the outer raceway (51) of the ball bearing is axially clamped between the transverse wall (53) and a support piece (55) fixed to the front bearing (15) via fixing screws (155) which are mounted in fixing or passage holes (355) of the front bearing (15), and wherein the support piece (55) has the form of a plate with a central opening (455) through which the rotor shaft (18) passes and which delimits a contact region with the outer raceway (51) of the ball bearing (26), **characterized in that** the support plate (55) has an open slot (555) extending from the central opening (455) to the outer periphery of the support piece (55).

2. Alternator according to Claim 1, **characterized in that** the heads of the fixing screws (155) come to rest on the support plate (55), **in that** the front bearing (15) has smooth fixing holes (355) for the fixing screws (155), and that the fixing screws (155) are self-tapping to form a thread in each fixing hole (355).

3. Alternator according to Claim 1 or 2, **characterized in that** the fixing screws (155) have milled heads and the support plate (55) has frustoconical holes (255) for supporting the heads of the fixing screws (155).

4. Alternator according to any of the preceding claims, **characterized in that** the fixing screws (155) have no means of adhesion for preventing their loosening.

5. Alternator according to any of the preceding claims, **characterized in that** the support plate (55) is mounted inside the casing (12).

6. Alternator according to any of Claims 1 to 4, **characterized in that** the support plate (55) is mounted outside the casing (12).

7. Alternator according to any of the preceding claims, **characterized in that** the support plate (55) has at least one notch (655, 755), separate from the opening slot (555), on one of its outer and inner peripheries.

8. Alternator according to Claim 7, **characterized in that** on one of its inner and/or outer peripheries, the support plate (55) has several notches (5655, 755) distributed regularly with the opening slot (555) .

9. Alternator according to Claim 7 or 8, **characterized in that** the front bearing (15) has at least one protuberance penetrating into a notch (655, 755) for angular indexation of the support plate (55).

10. Alternator according to any of Claims 1 to 8, **characterized in that** the support plate (55) comprises at least one lug (855) extending perpendicularly to the plane of the plate (55) for penetrating into a recess of the front bearing (15) and for angular indexation of the support plate (55), **in that** the lug (855) is delimited by two clearances (995) extending on either side of the lug (855), and **in that** the slot (555) opens into one of these clearances (995).

11. Alternator according to any of the preceding claims, **characterized in that** the slot (55) extends perpendicularly to the side of the support plate (55) into which it opens.

12. Alternator according to any of the preceding claims, **characterized in that** the slot (55) extends in inclined fashion relative to the side of the support plate (55) into which it opens.

13. Alternator according to any of the preceding claims, **characterized in that** the support plate (55) comprises a metal plate.

14. Alternator according to any of the preceding claims, **characterized in that** the support plate (55) has a rectangular or triangular form.

15. Alternator according to any of the preceding claims, **characterized in that** the rotor shaft (18) carries at the front a pulley (30), **in that** a first strut (44) is interposed between the pulley (30) and the inner raceway (50) of the ball bearing (26), **in that** the rotor shaft (18) passes through a water-penetration barrier (70) which is axially interposed between the ball bearing (26) and the transverse wall (53) of the front bearing (15) and presses against the inner raceway (50) of the ball bearing (26), and **in that** the barrier (70) is rotationally fixed to the inner raceway (50) of the ball bearing (26) and to the pulley (30) .

16. Alternator according to any of the preceding claims, **characterized in that** the rotor shaft (16) passes through an additional water-penetration barrier (80) which is mounted on the side of the ball bearing (26) opposite the first barrier (70), and **in that** the additional barrier (80) is rotationally fixed to the inner raceway (50) of the ball bearing (26) and to the pulley (30), presses against the inner raceway (50) of the ball bearing (26) and is installed inside the central opening (455) of the support plate (55).
